(19) Europäisches Patentamt / European Patent Office / Office européen des brevets

(11) **EP 3 202 835 B2**

(12) # NEW EUROPEAN PATENT SPECIFICATION
After opposition procedure

(45) Date of publication and mention
of the opposition decision:
**17.05.2023   Bulletin 2023/20**

(45) Mention of the grant of the patent:
**28.10.2020   Bulletin 2020/44**

(21) Application number: **15847582.2**

(22) Date of filing: **28.09.2015**

(51) International Patent Classification (IPC):
**C08J 9/16** (2006.01)      **C08J 9/232** (2006.01)
**C08L 77/00** (2006.01)

(52) Cooperative Patent Classification (CPC):
**C08J 9/18; C08J 9/0028; C08J 9/232;** C08J 9/122;
C08J 2201/034; C08J 2203/06; C08J 2205/044;
C08J 2300/26; C08J 2371/02; C08J 2377/00

(86) International application number:
**PCT/JP2015/077279**

(87) International publication number:
**WO 2016/052387 (07.04.2016 Gazette 2016/14)**

(54) **AMIDE ELASTOMER FOAM PARTICLES, METHOD FOR PRODUCING SAME, FOAM MOLDED BODY AND METHOD FOR PRODUCING FOAM MOLDED BODY**

AMIDELASTOMERSCHAUMSTOFFTEILCHEN, VERFAHREN ZUR HERSTELLUNG DAVON, FORMKÖRPER AUS SCHAUMSTOFF UND VERFAHREN ZUR HERSTELLUNG EINES FORMKÖRPERS AUS SCHAUMSTOFF

PARTICULES DE MOUSSE ÉLASTOMÈRE AMIDE, SON PROCÉDÉ DE PRODUCTION, CORPS MOULÉ EN MOUSSE ET PROCÉDÉ DE PRODUCTION DE CORPS MOULÉ EN MOUSSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2014   JP 2014201205
30.09.2014   JP 2014201210
11.03.2015   JP 2015048362**

(43) Date of publication of application:
**09.08.2017   Bulletin 2017/32**

(73) Proprietor: **Sekisui Plastics Co., Ltd.
Osaka-shi,
Osaka 530-0047 (JP)**

(72) Inventors:
• **TAKANO, Masayuki**
**Tenri-shi**
**Nara 632-0007 (JP)**
• **FUKUZAKI, Yuta**
**Tenri-shi**
**Nara 632-0007 (JP)**
• **AKUTA, Ryo**
**Tenri-shi**
**Nara 632-0007 (JP)**

(74) Representative: **Hoffmann Eitle
Patent- und Rechtsanwälte PartmbB
Arabellastraße 30
81925 München (DE)**

(56) References cited:
| | |
|---|---|
| EP-A1- 1 650 255 | EP-A1- 2 447 311 |
| WO-A1-2013/153190 | WO-A1-2014/198779 |
| WO-A1-2015/052265 | DE-A1-102014 216 992 |
| JP-A- H03 128 949 | JP-A- S61 268 737 |
| JP-A- 2006 022 138 | JP-A- 2011 068 776 |
| JP-A- 2012 214 725 | US-A- 4 988 740 |
| US-A1- 2007 254 972 | US-A1- 2009 030 096 |
| US-A1- 2011 294 910 | US-A1- 2014 151 918 |
| US-A1- 2014 275 306 | |

• **DATABASE WPI Week 198516 Thomson Scientific, London, GB; AN 1985-095383 XP002778181, & JP S60 42432 A (NIPPON STYRENE PAPER KK) 6 March 1985 (1985-03-06)**
• **présentation Foaming behaviour of TPE à la conférence Polymer Foams de 2013 (Hambourg)**
• **programme de la conférence Polymer Foams de 2013**
• **première page du classeur remis aux participants à la conférence Polymer Foams de 2013**

EP 3 202 835 B2

**(Cont. next page)**

- **Effect of Hard Segment Crystalline Phase on Foaming Behavior of Polyether-Block-Amide (PEBAX), présentation du 26 novembre 2012, dans Consortium for Cellular and Micro-Cellular Plastics (CCMCP) Progress Review Meeting (26-27 novembre 2012)**
- **Crystallization Behavior and Foaming Ability of Elastomeric Block Copolymer: Poly(ether-block-amide) PEBAX Thermoplastic Elastomers, Barzegari et al., abrégé G08-226, 2012 PPS Americas Conférence, Niagara Faits, Ontario (2012)**
- **Structural Characterisation of Extruded Polyolefin Foams Made Using a Chemical Expansion System, Shishesaz & Hornsby, Cellular Polymers 2nd International Conference (1993)**

- **rapport de master, Kun Un, université de Toronto (2010)**
- **brochure de présentation des polymères Pebax* datée 06-2007**
- **HORIBA Scientific, a guidebook to particle size analysis**
- **compte-rendu technique d'analyse d'images.**
- **compte-rendu technique d'analyse des propriétés viscoélastiques de résines PEBA.**

**Description**

TECHNICAL FIELD

The present invention relates to amide elastomer foam particles, method for producing same, foam molded body and method for producing foam molded body (amide-based elastomer expanded particles, a method for manufacturing the same, an expanded molded article, and a method for manufacturing the same). More particularly, the present invention relates to amide-based elastomer expanded particles from which an expanded molded article being excellent in recoverability and resilience, being highly expandable, and having a fine uniform cell structure can be obtained, and a method for manufacturing the same, an expanded molded article being excellent in recoverability and resilience, being highly expandable, and having a fine uniform cell structure, and a method for manufacturing the same. Since the expanded molded article of the present invention is excellent in recoverability and resilience, it can be used in wide use such as the industrial field, a core material of a bed, a filler of a cushion, a buffer material, a seat cushion (cushion of seat sheet of Shinkansen and aircrafts), and an automobile member (e.g. automobile interior material).

BACKGROUND TECHNOLOGY

In the past, a polystyrene expanded molded article has been used widely as a buffer material and a packaging material. Herein, the expanded molded article can be obtained by heating to expand (pre-expand) expandable particles such as expandable polystyrene particles to obtain expanded particles (pre-expanded particles), filling the resulting expanded particles into a cavity of a die, and thereafter, secondarily expanding the expanded particles to integrate them by thermal fusion.

It is known that since a monomer as a raw material is styrene, the polystyrene expanded molded article has high rigidity but low recoverability and resilience. For this reason, there was a problem that it is difficult to use the polystyrene expanded molded article in use in which it is repeatedly compressed, or in use in which flexibility is required.

In order to solve the above-described problem, in Patent Document 1, there has been proposed an expanded molded article using expanded particles consisting of a crosslinking-treated product of a thermoplastic elastomer resin consisting of a block copolymer having a crystalline polyamide segment and a polyether segment. It is stated therein that this expanded molded article exhibits high rubber elasticity.

Patent Document 2 relates to expanded beads of a thermoplastic elastomer resin having excellent properties as a t-shaped molding material for producing a foamed molded article exhibiting high rubber elasticity.

Patent Document 3 concerns a crosslinked foam of a copolymer having polyamide blocks and polyether blocks and a density from 20 to 700 kg/m$^3$.

PRIOR ART DOCUMENTS

Patent Documents

Patent Document 1: Japanese Examined Patent Application No. Hei 4-17977
Patent Document 2: JP S60 42432 A
Patent Document 3: EP 1 650 255 A1

SUMMARY OF THE INVENTION

PROBLEM TO BE SOLVED BY THE INVENTION

The expanded particles of Patent Document 1 are however also crosslinked at a surface thereof. For this reason, since moldability is deteriorated due to elongation of a surface at molding and deficiency in fusion between particles, there was a problem that recoverability and resilience are inferior. In addition, there was a problem that due to this deficiency, degree of shape freedom is deteriorated. Furthermore, since cells (average cell diameter is 320 to 650 μm) of an expanded article are coarse and uneven, there was a problem that appearance is deteriorated.

MEANS FOR SOLVING THE PROBLEM

The inventors of the present invention found out that even in the case where a non-crosslinked amide-based elastomer is a base resin, if only it has specified Shore D hardness and specified storage moduli at specific temperature below the crystallization temperature, and average cell diameter, expanded particles which can afford an expanded molded article excellent in recoverability and resilience at good moldability can be provided, leading to the present invention. Thus, the present invention provides amide-based elastomer expanded particles comprising a non-crosslinked amide-based elastomer having a Shore D hardness of 65 or less as a base resin and both of a storage modulus at a temperature of crystallization temperature - 10°C and a storage modulus at a temperature of crystallization temperature - 15°C in a range of $4 \times 10^6$ to $4 \times 10^7$ Pa, and having an average cell diameter of 20 to 250 $\mu$m and an average particle diameter of 1.5 to 15 mm, wherein the Shore D hardness is measured according to JIS K6253-3:2012 and the storage modulus is measured by dynamic viscoelasticity measurement in accordance with section <Storage Modulus> of the description.

Furthermore, the present invention provides a method for manufacturing amide-based elastomer expanded particles, the method comprising the steps of:

impregnating a blowing agent into resin particles comprising a non-crosslinked amide-based elastomer having a Shore D hardness of 65 or less and both of a storage modulus at a temperature of crystallization temperature - 10°C and a storage modulus at a temperature of crystallization temperature - 15°C in a range of $4 \times 10^6$ to $4 \times 10^7$ Pa to obtain expandable particles; and
expanding the expandable particles to obtain expanded particles having an average cell diameter of 20 to 250 $\mu$m and an average particle diameter of 1.5 to 15 mm, wherein the Shore D hardness is measured according to JIS K6253-3:2012 and the storage modulus is measured by dynamic viscoelasticity measurement in accordance with section <Storage Modulus> of the description.

Also, the present invention provides an expanded molded article, which is obtained by in-mold expanding the above-described amide-based elastomer expanded particles.

Furthermore, a method for manufacturing an expanded molded article comprising in-mold expanding the above-described amide-based elastomer expanded particles is provided.

EFFECTS OF INVENTION

According to the amide-based elastomer expanded particles of the present invention, there can be provided expanded particles which can mold well an expanded molded article excellent in recoverability and resilience. In addition, high expansion is possible, and a fine uniform cell structure can be realized.

Furthermore, when the amide-based elastomer expanded particles have a bulk density of 0.015 to 0.5 g/cm$^3$, there can be provided expanded particles which can mold well an expanded molded article more excellent in recoverability and resilience.

Additionally, the non-crosslinked amide-based elastomer is an elastomer having both of a storage modulus at a temperature of crystallization temperature - 10°C and a storage modulus at a temperature of crystallization temperature - 15°C in a range of $4 \times 10^6$ to $4 \times 10^7$ Pa, so that there can be provided expanded particles which can mold well an expanded molded article more excellent in recoverability and resilience.

Additionally, when the amide-based elastomer expanded particles have an average particle diameter of more than 5 mm and 15 mm or less, there can be provided expanded particles which can mold well an expanded molded article more excellent in recoverability and resilience.

Furthermore, when the amide-based elastomer expanded particles have an average particle diameter of 1.5 to 5 mm, higher expansion is possible, and a fine uniform cell structure can be realized.

Additionally, when the amide-based elastomer expanded particles have an outermost surface layer exhibiting an average cell diameter of 20 to 150 $\mu$m in a cross section thereof, higher expansion is possible, and a fine uniform cell structure can be realized.

Furthermore, amide-based elastomer expanded particles can be manufactured with ease through a step of impregnating a blowing agent into resin particles containing a non-crosslinked amide-based elastomer to obtain expandable particles and a step of expanding the expandable particles.

When the resin particles contain 100 parts by mass of a non-crosslinked amide-based elastomer and 0.02 to 1 part by mass of a cell adjusting agent, amide-based elastomer expanded particles can be manufactured with more ease.

Additionally, when the cell adjusting agent is a fatty acid amide-based organic substance, amide-based elastomer expanded particles can be manufactured with more ease.

Furthermore, when the expandable particles are obtained by impregnating a blowing agent into the resin particles in the presence of water, and the water is used at 0.5 to 4 parts by weight based on 100 parts by weight of the resin particles, amide-based elastomer expanded particles can be manufactured with more ease.

Additionally, the present invention can provide an expanded molded article excellent in recoverability and resilience. In addition, an expanded molded article which has a high expandability and has a fine uniform cell structure can be provided.

When the expanded molded article has a compression set of 10% or less and a restitution coefficient of 50 or more, there can be provided an expanded molded article more excellent in recoverability and resilience.

Furthermore, according to the method for manufacturing an expanded molded article of the present invention, when in-mold expansion is performed using amide-based elastomer expanded particles exhibiting a secondary expansion ratio of 1.5 to 4.0 times upon heating with water steam at a gauge pressure of 0.27 MPa for 20 seconds, there can be provided the above-described expanded molded article at better moldability.

BRIEF DESCRIPTION OF THE DRAWINGS

Fig. 1 is a graph showing a relationship between a temperature and a storage modulus of an amide-based elastomer of Example 1a.

Fig. 2 is a graph showing a relationship between a temperature and a storage modulus of an amide-based elastomer of Example 2a.

Fig. 3 is a graph showing a relationship between a temperature and a storage modulus of an amide-based elastomer of Example 3a.

Fig. 4 is a graph showing a relationship between a temperature and a storage modulus of an amide-based elastomer of Example 4a.

Fig. 5 is a graph showing a relationship between a temperature and a storage modulus of an amide-based elastomer of Comparative Example 1a.

Fig. 6 is a graph showing a relationship between a temperature and a storage modulus of an amide-based elastomer of Comparative Example 4a.

Fig. 7 is a cross-sectional photograph of expanded particles of Example 1b.

Fig. 8 is a cross-sectional photograph of expanded particles of Comparative Example 1b.

Fig. 9 is a cross-sectional photograph of expanded particles of Example 1c.

Fig. 10 is a cross-sectional photograph of expanded particles of Example 2c.

Fig. 11 is a schematic illustration view of a method for measuring an average cell diameter of an outermost surface layer.

BEST MODE FOR CARRYING OUT THE INVENTION

(Amide-Based Elastomer Expanded Particles)

Amide-based elastomer expanded particles (hereinafter, also referred to as expanded particles) include a non-crosslinked amide-based elastomer as a base resin. In the present specification, non-crosslinked means that a fraction of a gel which is insoluble in a dissolvable organic solvent is 3.0% by mass or less. A gel fraction can take 3.0% by mass, 2.5% by mass, 2.0% by mass, 1.5% by mass, 1.0% by mass, 0.5% by mass, and 0% by mass.

Herein, the gel fraction of the amide-based elastomer expanded particles is measured with the outline of the following.

A mass $W1$ of the amide-based elastomer expanded particles is measured. Then, the amide-based elastomer expanded particles are immersed in a solvent (100 milliliter of 3-methoxy-3-methyl-1-butanol) at 130°C over 24 hours.

Then, the residue in the solvent is filtered using a 80 mesh metal net, the residue remaining on the metal net is dried in a vacuum drier at 130°C over 1 hour, to measure a mass $W2$ of the residue remaining on the metal net, and the gel fraction of the amide-based elastomer expanded particles can be calculated based on the following equation.

$$\text{Gel fraction (\% by mass)} = 100 \times W2/W1$$

(1) Non-Crosslinked Amide-Based Elastomer

The non-crosslinked amide-based elastomer has a Shore D hardness of 65 or less. When the hardness is greater than 65, softening at expansion is difficult, and the desired expansion ratio may not be obtained. The Shore D hardness can take 65, 60, 55, 50, 45, 40, 35, 30, 25, 20, 15, 10, 5, and 0. The preferable Shore D hardness is 20 to 60, and the more preferable Shore D hardness is 30 to 60.

The non-crosslinked amide-based elastomer has a storage modulus at a temperature of crystallization temperature - 10°C and a storage modulus at a temperature of crystallization temperature - 15°C, both being in the range

of $4 \times 10^6$ to $4 \times 10^7$ Pa. When the storage modulus is greater than $4 \times 10^7$ Pa, softening at expansion is difficult, and the desired expansion ratio may not be obtained. When the storage modulus is smaller than $4 \times 10^6$ Pa, an expansion shape cannot be retained and the expanded particles may be contracted in the course of cooling after expansion. The storage modulus can take $4 \times 10^6$ Pa, $6 \times 10^6$ Pa, $8 \times 10^6$ Pa, $1 \times 10^7$ Pa, and $4 \times 10^7$ Pa. The range of a preferable storage modulus is $6 \times 10^6$ to $2 \times 10^7$ Pa. In addition, the storage moduli between the temperature of crystallization temperature - 10°C and the temperature of crystallization temperature-15°C are all in the range of $4 \times 10^6$ to $4 \times 10^7$ Pa.

It is preferable that, in a graph obtained by expressing a logarithm of the storage modulus on the y axis and the temperature on the x axis, an absolute value of $\alpha$ when expressed by the equation $y = \alpha x + \beta$ obtained from a storage modulus measured at a crystallization temperature and a storage modulus corresponding to a temperature which is 5°C lower than the crystallization temperature is 0.05 or more. When the absolute value is below 0.05, expanded particles may be contracted in the course of cooling after expansion. The absolute value of $\alpha$ can take e.g. 0.05, 0.08, 0.10, 0.15, 0.20, 0.25, 0.30, 0.35, 0.40, 0.45, 0.50, 0.55, 0.60, 0.65, 0.70. It is more preferable that the absolute value of $\alpha$ is 0.08 or more. It is preferable that an upper limit of the absolute value is 1.0. Additionally, it is more preferable that the absolute value is in the range of 0.08 to 0.50.

In a graph obtained by expressing a logarithm of the storage modulus on the y axis and the temperature on the x axis, it is preferable that the ratio $\alpha'/\alpha$ of $\alpha'$ and $\alpha$ is 0.5 or less when expressed by the equation $y = \alpha'x + \beta'$ obtained from a storage modulus corresponding to a temperature which is 15°C lower than the crystallization temperature and a storage modulus corresponding to a temperature which is 20°C lower than the crystallization temperature. When the ratio exceeds 0.5, expanded particles may be contracted in the course of cooling after expansion. A lower limit of the ratio $\alpha'/\alpha$ is preferably 0.01. The ratio $\alpha'/\alpha$ can take 0.01, 0.05, 0.10, 0.15, 0.20, 0.25, 0.30, 0.35, 0.40, 0.45, and 0.50.

In the non-crosslinked amide-based elastomer, a copolymer having a polyamide block (hard segment) and a polyether block (soft segment) can be used.

Examples of the polyamide block include *inter alia* polyamide structures derived from poly $\varepsilon$ capramide (nylon 6), polytetramethylene adipamide (nylon 46), polyhexamethylene adipamide (nylon 66), polyhexamethylene sebacamide (nylon 610), polyhexamethylene dodecamide (nylon 612), polyundecamethylene adipamide (nylon 116), polyundecaneamide (nylon 11), polylauramide (nylon 12), polyhexamethylene isophthalamide (nylon 61), polyhexamethylene terephthalamide (nylon 6T), polynanomethylene terephthalamide (nylon 9T), polymetaxylylene adipamide (nylon MXD6). The polyamide block may be a combination of units constituting these polyamide structures.

Examples of the polyether block include *inter alia* polyether structures derived from polyethylene glycol (PEG), polypropylene glycol (PPG), polytetramethylene glycol (PTMG), polytetrahydrofuran (PTHF). The polyether block may be a combination of units constituting these polyether structures.

The polyamide block and the polyether block may be randomly dispersed.

It is preferable that a number average molecular weight Mn of the polyamide block is 300 to 15,000. A number average molecular weight Mn of the polyamide block can take 300, 3,000, 6,000, 9,000, 12,000, and 15,000. It is preferable that a number average molecular weight Mn of the polyether block is 100 to 6,000. A number average molecular weight Mn of the polyether block can take 100, 1,000, 2,000, 3,000, 4,000, 5,000, and 6,000. It is more preferable that a number average molecular weight Mn of the polyamide block is 600 to 5,000. It is more preferable that a number average molecular weight Mn of the polyether block is 200 to 3,000.

It is preferable that the non-crosslinked amide-based elastomer has a melting point of 120 to 180°C. When the melting point is lower than 120°C, the elastomer may be contracted at the time when exposed to an ambient temperature after expansion, and when the melting point exceeds 180°C, expansion to the desired expansion ratio may become difficult. A melting point can take 120°C, 125°C, 130°C, 135°C, 140°C, 145°C, 150°C, 155°C, 160°C, 165°C, 170°C, 175°C, and 180°C. A more preferable melting point is 125 to 175°C.

A melting point of the non-crosslinked amide-based elastomer is measured with a differential scanning calorimeter (DSC) in accordance with JIS K7121: 1987. In addition, a melting point is an endothermic peak temperature in the course of temperature re-rise.

It is preferable that the non-crosslinked amide-based elastomer has a crystallization temperature of 90 to 140°C. When the crystallization temperature is lower than 90°C, the elastomer may be contracted at the time when exposed to an ambient temperature after expansion, and when the crystallization temperature exceeds 140°C, expansion to the desired expansion ratio may become difficult. A crystallization temperature can take 90°C, 95°C, 100°C, 105°C, 120°C, 125°C, 130°C, 135°C, and 140°C. A more preferable crystallization temperature is 100 to 130°C.

A crystallization temperature of the non-crosslinked amide-based elastomer is measured with a differential scanning calorimeter (DSC) in accordance with JIS K7121: 1987. In addition, a crystallization temperature is an exothermic peak temperature in the course of temperature fall at a temperature lowering rate of 2°C/min.

In the non-crosslinked amide-based elastomer, amide-based elastomers described in U.S. Patent No. 4,331,786, U.S. Patent No. 4,115,475, U.S. Patent No. 4,195,015, U.S. Patent No. 4,839,441, U.S. Patent No. 4,864,014, U.S. Patent No. 4,230,838, and U.S. Patent No. 4,332,920 can also be used.

As the non-crosslinked amide-based elastomer, a non-crosslinked amide-based elastomer obtained by copolycondensation of a polyamide block having a reactive end group and a polyether block having a reactive end group is preferable. Examples of this copolycondensation include particularly the followings:

> 1) copolycondensation of a polyamide block having a diamine chain end and a polyoxyalkylene block having a dicarboxylic acid chain end,
> 2) copolycondensation of a polyamide unit having a dicarboxylic acid chain end obtained by cyanoethylation and hydrogenation of an aliphatic dihydroxylated α, ω-polyoxyalkylene unit called polyether diol and a polyoxyalkylene unit having a diamine chain end, and
> 3) copolycondensation of a polyamide unit having a dicarboxylic acid chain end and polyether diol (one obtained in this case is particularly called poly(ether ester amide)).

Examples of a compound which gives a polyamide block having a dicarboxylic acid chain end include compounds obtained by condensation of dicarboxylic acid and diamine in the presence of a chain regulating agent of α, ω-aminocarboxylic acid, lactam or dicarboxylic acid.

In the case of copolycondensation of 1), the non-crosslinked amide-based elastomer can be obtained, for example, by reacting polyether diol, lactam (or α, ω-amino acid), and a diacid being a chain-limiting agent, in the presence of a small amount of water. The non-crosslinked polyamide-based elastomer may have a polyether block and a polyamide block of various lengths, and furthermore, it may be dispersed in a polymer chain by a random reaction of respective components.

At the above-described copolycondensation, a block of polyether diol may be used as it is, or a hydroxy group thereof and a polyamide block having a carboxyl terminal group may be copolymerized and this may be used, or after a hydroxy group thereof is aminated to convert polyether diol into polyether diamine, the aminated product is condensed with a polyamide block having a carboxyl terminal group, and the condensation product may be used. Alternatively, by mixing a block of polyether diol with a polyamide precursor and a chain-limiting agent and subjecting the mixture to copolycondensation, a polymer containing a polyamide block and a polyether block which have been randomly dispersed can also be obtained.

The base resin may contain, in addition to the non-crosslinked amide-based elastomer, other resins such as an amide-based resin, a polyether resin, a crosslinked amide-based elastomer, a styrene-based elastomer, an olefin-based elastomer, and an ester-based elastomer, in such a range that the effect of the present invention is not inhibited. Other resins may be known thermoplastic resin or thermosetting resin.

(2) Shape of Expanded Particles

It is preferable that expanded particles have a bulk density in the range of 0.015 to 0.5 g/cm$^3$. When the bulk density is less than 0.015 g/cm$^3$, since contraction may be generated in the resulting expanded molded article, appearance may not become good, and the mechanical strength of the expanded molded article may be reduced. When the bulk density is greater than 0.5 g/cm$^3$, lightweight property of the expanded molded article may be deteriorated. A bulk density can take 0.015 g/cm$^3$, 0.05 g/cm$^3$, 0.1 g/cm$^3$, 0.15 g/cm$^3$, 0.2 g/cm$^3$, 0.25 g/cm$^3$, 0.3 g/cm$^3$, 0.35 g/cm$^3$, 0.4 g/cm$^3$, 0.45 g/cm$^3$, and 0.5 g/cm$^3$. A more preferable bulk density is 0.02 to 0.2 g/cm$^3$, and a further preferable bulk density is 0.05 to 0.1 g/cm$^3$.

A shape of the expanded particles is not particularly limited, but examples thereof include *inter alia* a truly spherical shape, an elliptically spherical shape (oval shape), a columnar shape, a prismatic shape, a pellet-like shape, a granular shape.

The expanded particles have an average cell diameter of 20 to 250 μm. When the average cell diameter is less than 20 μm, the expanded molded article may be contracted. When the average cell diameter is greater than 250 μm, deterioration in appearance of a molded article and deterioration in fusion may be caused. An average cell diameter can take 20 μm, 40 μm, 50 μm, 100 μm, 150 μm, 200 μm, and 250 μm. An average cell diameter is more preferably 20 to 200 μm, and further preferably 40 to 150 μm.

In the expanded particles, in order to restrain a cell structure of the expanded molded article from becoming uneven, it is preferable that the number of cells having a cell diameter exceeding 250 μm is small. Specifically, the ratio of cells having a cell diameter exceeding 250 μm is preferably 30% or less, more preferably 20% or less, and further preferably 10% or less, relative to all cells.

The expanded particles may have an average particle diameter of more than 5 mm and not more than 15 mm. When the average particle diameter is 5 mm or less, secondary expandability at molding may be deteriorated. When the average particle diameter is more than 15 mm, die-filling property may be deteriorated upon preparation of the expanded molded article by in-mold molding. An average particle diameter can take 5.5 mm, 8 mm, 10 mm, 12 mm, 14 mm, and 15 mm. A more preferable average particle diameter is 7 to 12 mm.

The expanded particles may have an average particle diameter of 1.5 to 5 mm. When the average particle diameter is less than 1.5 mm, manufacturing of the expanded particles itself may be difficult and the manufacturing cost may be increased. When the average particle diameter is greater than 5 mm, it may be difficult to obtain an expanded molded article having a complicated shape upon preparation of the expanded molded article by in-mold molding. An average particle diameter can take 1.5 mm, 2 mm, 3 mm, 4 mm, and 5 mm. A more preferable average particle diameter is 2.0 to 4.0 mm.

The expanded particles can be used as they are in a filler of a cushion, or can be used as a raw material of an expanded molded article for in-mold expansion. When used as a raw material of the expanded molded article, usually, expanded particles are called "pre-expanded particles" and expansion for obtaining them is called "pre-expansion".

(Method for Manufacturing Amide-Based Elastomer Expanded Particles)

Amide-based elastomer expanded particles can be obtained through a step of impregnating a blowing agent into resin particles including a non-crosslinked amide-based elastomer to obtain expandable particles (impregnation step) and a step of expanding the expandable particles (expansion step).

(1) Impregnation Step

(a) Resin Particles

Resin particles can be obtained using known manufacturing method and manufacturing facilities.

For example, the resin particles can be manufactured by melt-kneading a non-crosslinked amide-based elastomer resin using an extruder, and then, performing e.g. granulation by extrusion, underwater cutting or strand cutting. The temperature, the time, the pressure at melt-kneading can be appropriately set in conformity with raw materials to be used and manufacturing facilities.

A melt-kneading temperature in an extruder at melt-kneading is preferably 170 to 250°C, which is a temperature at which the non-crosslinked amide-based elastomer is sufficiently softened, and more preferably 200 to 230°C. A melt-kneading temperature means a temperature of a melt-kneading product in an extruder, which is obtained by measuring a temperature of a central part of a melt-kneading product flow channel near an extruder head with a thermocouple thermometer.

A shape of the resin particles is, for example, a truly spherical shape, an elliptically spherical shape (oval shape), a columnar shape, a prismatic shape, a pellet-like shape or a granular shape.

The resin particles are such that when the length thereof is expressed by L and the average diameter is expressed by D, L/D is preferably 0.8 to 3. When L/D of the resin particles is less than 0.8 or exceeds 3, a filling property into a mold die may be deteriorated. In addition, the length L of the resin particles refers to the length in an extrusion direction, and the average diameter D refers to a diameter of a cross section of the resin particles, substantially orthogonal with the direction of the length L.

An average diameter D of the resin particles is preferably 0.5 to 1.5 mm. When the average diameter is less than 0.5 mm, holdability of a blowing agent may be deteriorated to deteriorate expandability of expandable particles. When the average diameter is greater than 1.5 mm, a filling property of expanded particles into a mold die may be deteriorated, and at the same time, when a plate-like expanded molded article is manufactured, the thickness of the expanded molded article may not be able to be reduced.

The resin particles may contain a cell adjusting agent.

Examples of the cell adjusting agent include *inter alia* a higher fatty acid amide, a higher fatty acid bisamide, a higher fatty acid salt, and an inorganic cell nucleating agent. A plurality of kinds of these cell adjusting agents may be combined.

Examples of the higher fatty acid amide include *inter alia* stearic acid amide, and 12-hydroxystearic acid amide.

Examples of the higher fatty acid bisamide include *inter alia* ethylenebis(stearic acid amide), ethylenebis-12-hydroxystearic acid amide, methylenebis(stearic acid amide).

Examples of the higher fatty acid salt include calcium stearate.

Examples of the inorganic cell nucleating agent include *inter alia* talc, calcium silicate, synthetic or naturally occurring silicon dioxide.

Among the cell adjusting agents, fatty acid amide-based organic substances of a higher fatty acid amide and a higher fatty acid bisamide are preferable.

An amount of the cell adjusting agent is preferably 0.02 to 1 part by mass based on 100 parts by mass of the non-crosslinked amide-based elastomer. When the amount of the cell adjusting agent is less than 0.02 parts by mass, the refining effect of cells due to the cell adjusting agent may be deteriorated. This deterioration makes coarse cells of expanded particles obtained by expanding expandable particles, as a result, the expanded particles are broken and contracted at in-mold expansion molding and an expanded molded article cannot be obtained, or even if an expanded molded article is obtained, the deterioration leads to generation of degradation in appearance such as generation of irregularities on a surface thereof. When the amount is larger than 1 part by mass, the effect reaches a plateau, and conversely, there may give rise to a problem such as deficiency in fusion between expanded molded articles and cost increase. An amount of the cell adjusting agent is more preferably 0.02 to 0.3 parts by mass, and further preferably 0.05 to 0.1 parts by mass.

The cell adjusting agent may be mixed with a resin in an extruder, or may be attached to the resin particles.

The resin particles may contain additionally e.g. a flame retardant such as hexabromocyclododecane and triallyl isocyanurate 6 bromides; a coloring agent such as carbon black, iron oxide, and graphite.

(b) Expandable Particles

The resin particles are impregnated with a blowing agent to manufacture expandable particles. In addition, as the outline of impregnating a blowing agent into resin particles, known outline can be used. Examples thereof include:

- a method of dispersing resin particles in water by supplying the resin particles, a dispersant, and water into an autoclave to stir, to manufacture a dispersion, feeding a blowing agent under pressure into this dispersion, and impregnating the blowing agent into the resin particles (wet impregnation method); and
- a method of feeding a blowing agent under pressure into resin particles in an autoclave, and impregnating the blowing agent into the resin particles (dry impregnation method).

The dispersant in the wet impregnation method is not particularly limited, but examples thereof include water hardly soluble inorganic substances such as calcium phosphate, magnesium pyrophosphate, sodium pyrophosphate, and magnesium oxide; and surfactants such as sodium dodecylbenzenesulfonate.

In the dry impregnation method, since a large amount of water is not used, water treatment is unnecessary, and thus, there is an advantage that the manufacturing cost can be reduced. The dry impregnation method is not particularly limited, but can be performed under known condition. For example, an impregnation temperature can be 40 to 140°C.

In the dry impregnation method, it is preferable to impregnate a blowing agent in the presence of a small amount of water. By allowing a small amount of water to exist, the blowing agent can be prevented from dissipating from a surface of the expanded particles. The inventors consider that, by positioning of a small amount of water on a surface of the expandable particles, dissipation of the blowing agent in the expandable particles is restrained. An amount of water is preferably 0.5 to 4 parts by mass based on 100 parts by mass of the resin particles. When the amount of water is less than 0.5 parts by mass, spreading of water is insufficient, and dissipation of the blowing agent cannot be prevented, and cells in a surface layer of the expanded particles may be coarsened. When the amount of water exceeds 4 parts by mass, bridging is generated at extraction from a dry impregnation device, and the expandable particles may not be taken out. Furthermore, even when the expandable particles could be taken out, since the time is necessary for takeout, the blowing agent is consequently dissipated, and surface layer cells may be coarsened. A more preferable amount of water is 1 to 3 parts by mass.

As the blowing agent, general-purpose blowing agents are used, examples thereof include inorganic gases such as the air, nitrogen, carbon dioxide (carbonic acid gas), and argon; aliphatic hydrocarbons such as propane, butane, and pentane; and halogenated hydrocarbons, and an inorganic gas and an aliphatic hydrocarbon are preferable. In addition, the blowing agent may be used alone, or two or more kinds thereof may be used concurrently.

It is preferable that an amount of the blowing agent to be impregnated into the resin particles is 4 parts by mass or more based on 100 parts by mass of the resin particles. Additionally, the amount is preferably 12 parts by mass or less. When the amount is less than 4 parts by mass, expanding power is reduced, and it is difficult to perform good expansion at the high expansion ratio. When the content of the blowing agent exceeds 12 parts by mass, breakage of a cell membrane is easily generated, the plasticizing effect becomes too great, the viscosity at expansion is easily reduced, and contraction becomes easy to occur. A more preferable amount of the blowing agent is 5 parts by mass or more. A further preferable amount of the blowing agent is 6 to 8 parts by mass. Within this range, expanding power can be sufficiently enhanced, and even at the high expansion ratio, the particles can be expanded further well. When the content of the blowing agent is 8 parts by mass or less, breakage of a cell membrane is suppressed, since the plasticizing effect does not become too great, excessive reduction in the viscosity at expansion is suppressed, and contraction is suppressed. In addition, an amount of the blowing agent may be 5 to 30 parts by mass, or may be 10 to 20 parts by mass, based on 100 parts by mass of the resin particles.

The content (impregnation amount) of the blowing agent which has been impregnated relative to 100 parts by mass of the resin particles is measured as follows.

(In Case of Inorganic Gas)

A mass X g before placement of the resin particles into a pressure container is measured. After the resin particles are impregnated with the blowing agent in a pressure container, a mass Y g after takeout of an impregnation product from the pressure container is measured. By the following equation, the content (impregnation amount) of the blowing agent which has been impregnated relative to 100 parts by mass of the resin particles is obtained.

$$\text{Content of blowing agent (\% by mass)} = ((Y\text{-}X)/X) \times 100$$

(In Case of Gases other than Inorganic Gas)

An amount of about 15 mg of the resin particles is precisely weighed, set at a decomposition furnace inlet of a pyrolyzer PYR-1A manufactured by Shimadzu Corporation, and purged with nitrogen for about 15 seconds to exhaust a gas which was mixed therein at sample setting. After closing, the sample is inserted into a furnace core at 200°C, heated for 120 seconds to discharge the gas, and this discharged gas is quantitatively determined using gas chromatograph GC-14B (detector: FID) manufactured by Shimadzu Corporation, thereby, an amount of the remaining gas is obtained. The measurement conditions are such that as a column, Shimalite 60/80 NAW (Squalane 25%) 3 m $\times$ 3 $\phi$ is used, and a column temperature (70°C), a carrier gas (nitrogen), a carrier gas flow rate (50 ml/min), an injection port temperature (110°C), and a detector temperature (110°C) are used.

When a temperature for impregnating the blowing agent into the resin particles is low, the time necessary for impregnating the blowing agent into the resin particles will become long and the production efficiency may be reduced. On the other hand, when the temperature is high, the resin particles are mutually fused to generate bonded particles. An impregnation temperature is preferably -15 to 120°C, more preferably in the range of 0 to 110°C or 60 to 120°C, and further preferably 70 to 110°C. A blowing auxiliary agent (plasticizer) may be used together with the blowing agent. Examples of the blowing auxiliary agent (plasticizer) include *inter alia* diisobutyl adipate, toluene, cyclohexane, and ethylbenzene.

(2) Expansion Step

In the expansion step, an expansion temperature and a heating medium are not particularly limited, as long as expandable particles can be expanded to obtain expanded particles.

In the expansion step, it is preferable to add an inorganic component to the expandable particles. Examples of the inorganic component include inorganic compound particles such as calcium carbonate and aluminum hydroxide. An amount of the inorganic component to be added is preferably 0.03 parts by mass or more, more preferably 0.05 parts by mass or more, preferably 0.2 parts by mass or less, and more preferably 0.1 parts by mass or less, based on 100 parts by mass of the expandable particles.

When expansion is performed under the high pressure steam, if an organic coalescence preventing agent is used, it may be melted at expansion. On the other hand, an inorganic coalescence preventing agent such as calcium carbonate has a sufficient coalescence preventing effect even under high pressure steam heating.

A particle diameter of the inorganic component is preferably 5 $\mu$m or less. A minimum value of a particle diameter of the inorganic component is about 0.01 $\mu$m. When a particle diameter of the inorganic component is not more than the upper limit, an addition amount of the inorganic component can be reduced, and the inorganic component becomes difficult to adversely influence (inhibit) a later molding step.

In addition, before expansion, powdery metal soaps such as zinc stearate, calcium carbonate, and aluminum hydroxide may be coated on a surface of the resin particles. This coating can decrease binding between the resin particles in an expansion step. Alternatively, a surface treating agent such as an antistatic agent and a spreader may be coated. Examples of the antistatic agent include *inter alia* polyoxyethylene alkylphenol ether, and stearic acid monoglyceride. Examples of the spreader include *inter alia* polybutene, polyethylene glycol, and silicone oil.

(Expanded Molded Article)

An expanded molded article is obtained by in-mold molding expanded particles, and includes a fused body of a plurality of expanded particles. For example, the expanded molded article can be obtained by filling the expanded particles into a closed die having a number of small pores, heating to expand the expanded particles with the water steam under pressure to fill spaces between the expanding particles, and at the same time, mutually fusing the expanded particles to integrate them. Thereupon, for example, the density of the expanded molded article can be adjusted by adjusting an amount of the expanded particles to be filled into a die.

It is preferable that the expanded molded article has a density of 0.015 to 0.5 $g/cm^3$. Within this range, the compression set and mechanical physical properties can be made compatible at a good balance. The more preferable density is 0.02 to 0.2 $g/cm^3$.

It is preferable that in-mold expansion is performed using the above-described amide-based elastomer expanded particles which exhibits the secondary expansion ratio of 1.5 to 4.0 times when heated with the water steam at a gauge pressure of 0.27 MPa for 20 seconds. Within this range of the secondary expansion ratio, the expanded molded article in which the expanded particles are more fused can be obtained.

Furthermore, the expanded particles may be impregnated with an inert gas to improve expanding power of the expanded particles. By improving expanding power, mutual fusibility between the expanded particles is improved at in-mold molding, and the expanded molded article has further excellent mechanical strength. In addition, examples of the inert gas include *inter alia* carbon dioxide, nitrogen, helium, argon.

An example of a method of impregnating the inert gas into the expanded particles includes a method of impregnating the inert gas with the expanded particles by placing the expanded particles under the atmosphere of the inert gas having a pressure of an ambient pressure or higher. The expanded particles may be impregnated with the inert gas before filling into a die, or after filling the expanded particles into a die, the expanded particles may be impregnated with the inert gas by placing them together with the die under the inert gas atmosphere. In addition, when the inert gas is nitrogen, it is preferable that the expanded particles are allowed to stand in the atmosphere of nitrogen at 0.1 to 2.0 MPa over 20 minutes to 24 hours.

When the expanded particles have been impregnated with the inert gas, the expanded particles may be heated and expanded as they are in a die, or before filling the expanded particles into a die, the expanded particles are heated and expanded to obtain expanded particles of the high expansion ratio, and thereafter, the expanded particles may be filled into a die, and heated and expanded. By using such expanded particles of the high expansion ratio, the expanded molded article of the high expansion ratio can be obtained.

Additionally, when a coalescence preventing agent is used at manufacturing of the expanded particles, at manufacturing of the expanded molded article, molding may be performed while the coalescence preventing agent is attached to the expanded particles. Additionally, in order to promote mutual fusion of the expanded particles, the coalescence preventing agent may be washed to remove before a molding step, or stearic acid as a fusion promoter may be added at molding, with or without removal of the coalescence preventing agent.

The expanded molded article of the present invention can be used, for example, in the industrial field, a core material of a bed, a filler of a cushion, a buffer material, a seat cushion (cushion of seat sheet of Shinkansen and aircrafts), an automobile member (e.g. automobile interior material). Particularly, the expanded molded article can be used in intended use in which improvement in the compression set is required.

EXAMPLES

Then, the present invention will be explained in further detail by way of examples, but the present invention is not limited to them.

<Shore D Hardness>

The Shore D hardness refers to the hardness measured in accordance with the test method of JIS K6253-3: 2012. Specifically, a D-type durometer is vertically pushed against a sample which has been adjusted to 100 mm × 100 mm × 10 mm in thickness, and a numerical value after one second is measured. Thereupon, measurement is performed at a measurement position of 12 mm or more inner from a sample external end, an interval of 10 mm between measurement points is secured, measurement is performed at five points for one sample, and an average value is defined as Shore D hardness.

<Storage Modulus>

Dynamic viscoelasticity is measured with a viscoelasticity measuring device Physica MCR301 (manufactured by Anton Paar) and a temperature controlling system CTD450. First, a resin sample is molded into a discoid test piece having a diameter of 25 mm and a thickness of 3 mm with a heat pressing machine under the condition of a temperature of 180°C. The test piece is dried with a vacuum drier at 120°C for 4 hours under reduced pressure condition. Then, the test piece is set on a plate of the viscoelasticity measuring device heated at a measurement temperature, and is heated and melted under the nitrogen atmosphere over 5 minutes. Thereafter, the test piece is crushed with parallel plates having a diameter of 25 mm up to an interval of 2 mm, and a resin which has stuck out from the plate is removed. Furthermore, after a temperature reaches a measurement temperature ±1°C and the test piece is heated for 5 minutes, dynamic viscoelasticity is measured under the nitrogen atmosphere, with a dynamic strain being 1%, a frequency being 1 Hz, a measurement mode being oscillation measurement (temperature dependency), and a cooling rate being 2°C/min from 220°C, and temperature dependency of a storage modulus is measured.

<Crystallization Temperature>

A crystallization temperature is measured by the method described in JIS K7121: 1987 "Testing Methods for Transition Temperatures of Plastics". Provided that a sampling method and temperature conditions are as follows. Using a differential scanning calorimeter Model DSC6220 (manufactured by SII Nano Technology Inc.), about 6 mg of a sample is filled on a bottom of a measurement container made of aluminum without gaps, and a DSC curve when under a nitrogen gas flow rate of 20 mL/min, a temperature is raised from 30°C to 220°C (Heating), and held for 10 minutes, and a temperature is lowered from 220°C to -40°C (Cooling) is obtained. In addition, a temperature raising rate is 10°C/min, and a temperature lowering rate is 2°C/min. As a standard substance, alumina is used. In addition, a crystallization temperature is a value obtained by reading a temperature of a top of a crystallization peak on a highest temperature side, which is seen in Cooling process, using analysis software attached to the device.

<Melting Point>

A melting point is measured by the method described in JIS K7121: 1987 "Testing Methods for Transition Temperatures of Plastics". Provided that a sampling method and temperature conditions are as follows. Using a differential scanning calorimeter Model DSC6220 (manufactured by SII Nano Technology Inc.), about 6 mg of a sample is filled on a bottom of a measurement container made of aluminum without gaps, and a DSC curve when under a nitrogen gas flow rate of 20 mL/min, a temperature is lowered from 30°C to -40°C, and held for 10 minutes, a temperature is raised from -40°C to 220°C (1st Heating), and held for 10 minutes, a temperature is lowered from 220°C to -40°C (Cooling), and held for 10 minutes, and a temperature is raised from -40°C to 220°C (2nd Heating) is obtained. In addition, all temperature rising and temperature lowering are performed at a rate of 10°C/min, and as a standard substance, alumina is used. In addition, a melting point is a value obtained by reading a temperature of a top of a melting peak on a highest temperature side, which is seen in 2nd Heating process, using analysis software attached to the device.

<Bulk Density of Expanded Particles>

First, W g of expanded particles as a measurement sample are collected, this measurement sample is naturally dropped into a measuring cylinder, and slightly shaken to make constant an apparent volume (V) cm$^3$ of the sample, a mass and a volume thereof are measured, and the bulk density of the expanded particles is measured based on the following equation.

$$\text{Bulk density (g/cm}^3) = \text{mass of measurement sample (W)/volume of measurement sample (V)}$$

<Average Particle Diameter of Expanded Particles>

Using a Ro-Tap type sieve shaker (manufactured by SIEVE FACTORY IIDA CO., LTD.), about 50 g of expanded particles are classified for 5 minutes with JIS standard sieves having sieve openings of 16.00 mm, 13.20 mm, 11.20 mm, 9.50 mm, 8.00 mm, 6.70 mm, 5.60 mm, 4.75 mm, 4.00 mm, 3.35 mm, 2.80 mm, 2.36 mm, 2.00 mm, 1.70 mm, 1.40 mm, 1.18 mm, and 1.00 mm. A mass of the sample on a sieve net is measured, and based on an accumulated mass distribution curve obtained from the result, a particle diameter (median diameter) at which an accumulated mass becomes 50% is defined as average particle diameter.

<Average Cell Diameter and Ratio of Cells>

An average cell diameter of expanded particles refers to an average cell diameter measured in accordance with the test method of ASTM D2842-69. Specifically, the expanded particles are cut into approximately two equal parts, and a cut section is magnified and photographed at 100 times using a scanning electron microscope (product name "S-3000N", manufactured by Hitachi, Ltd.). Each four images of photographed images are printed on an A4 paper, one straight line having a length of 60 mm is drawn at an arbitrary place, and from the number of cells present on this straight line, the average chord length (t) of cells is calculated by the following equation.

$$\text{Average chord length t} = 60/(\text{number of cells} \times \text{magnification of photograph})$$

In addition, when in drawing a straight line, the straight line comes into point contact with a cell, this cell is also included in the number of cells, and furthermore, when both ends of the straight line are brought into the state where they are positioned in a cell without penetrating the cell, the cell at which both ends of the straight line are positioned is also included in the number of cells. Furthermore, at arbitrary five places of photographed images, the average chord length is calculated with the same outline as that as described above, and an arithmetic mean value of these average chord lengths is defined as average cell diameter of cells of the expanded particles.

Furthermore, by images used in the above-described method of measuring an average cell diameter, the number of whole cells, the number of cells having a cell diameter exceeding 250 $\mu$m, the number of cells having a cell diameter of 150 $\mu$m or more and less than 250 $\mu$m, and the number of cells having a cell diameter of less than 150 $\mu$m are measured. The ratio of the number of each cell diameter relative to whole cells is calculated.

<Criteria for Determining Fusibility>

○: In an expanded molded article, when a notch of a depth 5 mm is formed, and the expanded article is bent along the notch, it shall not be fractured.

×: In an expanded molded article, when a notch of a depth 5 mm is formed, and the expanded article is bent along the botch, it is fractured.

<Compression Set>

The compression set is measured by the following calculation method in accordance with the compression set test (JIS K6767: 1999).

- Test piece: 50W × 50L × 25T (mm) (one side skin)
- Compression ratio: 25 (%)
- Number of tests: 3

Method of Calculating Compression Set

$$\text{Compression set (\%)} = (\text{initial thickness (mm)} - \text{thickness after test (mm)})/\text{initial thickness (mm)} \times 100$$

<Resilience>

Resilience refers to resilience measured in accordance with the test method of JIS K6400-3: 2011. Specifically, using a foam rebound resilience tester Model FR-2 manufactured by KOBUNSHI KEIKI CO., LTD., corundum having a diameter 5/8 inch and a mass 16.3 g is dropped to a molded article which has been molded into a thickness 50 mm, from a height of 500 mm, and a height at which corundum reached a highest rebound is read. A total of five times of the same operation is repeated, and resilience is calculated from an average value.

Method of Calculating Resilience

$$\text{Resilience (\%)} = \text{height at which corundum reached highest rebound (mm)}/500 \text{ (mm)} \times 100$$

Example 1a

(1) Impregnation Step

100 parts by mass of particles (average diameter 3 mm) of Pebax 5533 (manufactured by Arkema), being an amide-based elastomer in which nylon 12 is a hard segment and polytetramethylene glycol is a soft segment, were sealed in a pressure container, the inner atmosphere of the pressure container was replaced with a carbonic acid gas, and a carbonic acid gas was fed under pressure up to an impregnation pressure of 4.0 MPa. The particles were allowed to stand under the environment at 20°C, an impregnation time of 24 hours passed, and thereafter, the inner atmosphere of the pressure container was slowly depressurized over 5 minutes. By doing this, the amide-based elastomer was impregnated with a carbonic acid gas to obtain expandable particles. When an impregnation amount of the blowing agent which had been impregnated into the expandable particles was measured by the above-described method, the amount was found to be 6.2% by mass.

(2) Expansion Step

Immediately after depressurization in the above-described (1) impregnation step, the expandable particles were taken out from the pressure container, and thereafter, 0.08 parts by mass of calcium carbonate was added, and the materials were mixed. Thereafter, using the water steam, the above-described impregnation product was expanded with the water steam in a high pressure expansion bath, while stirring at an expansion temperature of 136°C. After expansion, the particles were taken out from the high pressure expansion bath, calcium carbonate was removed with an aqueous hydrogen chloride solution, and thereafter, drying with a pneumatic conveying drier was performed to obtain expanded particles. When the bulk density of the resulting expanded particles was measured by the above-described method, it was found to be 0.05 g/cm$^3$. Additionally, when an average cell diameter in the resulting expanded particles was measured, it was found to be 180 $\mu$m.

(3) Molding Step

The resulting expanded particles were allowed to stand at room temperature (23°C) for one day, and sealed in a pressure container, the inner atmosphere of the pressure container was replaced with a nitrogen gas, and a nitrogen gas was fed under pressure up to an impregnation pressure (gauge pressure) of 1.0 MPa. The particles were allowed to stand under the environment at 20°C, and pressure curing was conducted for 8 hours. The particles were taken out, and heated with the water steam at 0.22 MPa for 20 seconds in order to measure the secondary expansion ratio, and the secondary expansion ratio was found to be 3.5 times. Expanded particles different from the expanded particles for which the secondary expansion ratio had been measured, were filled into a molding die of 23 mm × 300 mm × 400 mm, heated with the water steam at 0.27 MPa for 40 seconds, and then, cooled until a maximum surface pressure of an expanded molded article dropped to 0.01 MPa, thereby, an expanded molded article was obtained. Evaluation of the expanded particles and the expanded molded article is described in Table 1.

Example 2a

Impregnation, expansion, and molding were carried out in the same manner as in Example 1a except that the elastomer was changed to Pebax 4033 (manufactured by Arkema) of an amide-based elastomer in which nylon 12 is a hard segment and polyether is a soft segment. Evaluation of the expanded particles and the expanded molded article is described in Table 1.

Example 3a

Impregnation, expansion, and molding were carried out in the same manner as in Example 1a except that the elastomer was changed to UBESTA9040X1 (manufactured by Ube Industries, Ltd.) of an amide-based elastomer in which nylon 12 is a hard segment and polyether is a soft segment. Evaluation of the expanded particles and the expanded molded article is described in Table 1.

Example 4a

Impregnation, expansion, and molding were carried out in the same manner as in Example 1a except that the elastomer was changed to UBESTA9048X1 (manufactured by Ube Industries, Ltd.) of an amide-based elastomer, in which nylon 12 is a hard segment and polyether is a soft segment. Evaluation of the expanded particles and the expanded molded article is described in Table 1.

Example 5a

100 parts by mass of particles (average diameter 3 mm) of Pebax 5533 (manufactured by Arkema), 100 parts by mass of water, 0.5 parts by mass of calcium tertiary phosphate as a dispersant, 0.1 parts by mass of sodium dodecylbenzenesulfonate having a purity of 25%, 12 parts by mass of butane as a blowing agent, and 0.2 parts by mass of ethylenebis (stearic acid amide) as a cell adjusting agent were sealed in a pressure container, and heated to 110°C at a temperature raising rate of 2°C/min while stirring. The materials were held at 110°C for 5 hours, and impregnation treatment of the blowing agent was performed. After cooled to 20°C, the impregnation product was taken out from the container, and expansion and molding were performed in the same manner as in Example 1a.

Comparative Example 1a

Impregnation was carried out in the same manner as in Example 1a except that the elastomer was changed to Pebax 7033 (manufactured by Arkema) of an amide-based elastomer, in which nylon 12 is a hard segment and polyether is a soft segment. Expansion was carried out at an expansion temperature of 146°C, but expansion could not be performed.

Comparative Example 2a

Comparative Example 2a was carried out in the same manner as in Example 1a except that after the impregnation product was taken out from the pressure container, it was allowed to stand at an ambient temperature until 20 minutes passed, and an amount of a carbonic acid gas contained in the particles was decreased to 4.5%. When a cell diameter of the expanded particles was measured, it was found to be 270 $\mu$m. Evaluation of the expanded particles and the expanded molded article is described in Table 2.

Comparative Example 3a

100 parts by mass of particles (average diameter 3 mm) of Pebax 5533 (manufactured by Arkema), 100 parts by mass of water, 0.5 parts by mass of calcium tertiary phosphate as a dispersant, 0.1 parts by mass of sodium dodecylbenzenesulfonate having a purity of 25%, and 0.6 parts by mass of dicumyl peroxide as a crosslinking agent were sealed in a pressure container, and heated to 130°C at a temperature raising rate of 2°C/min while stirring. The materials were held at 130°C for 5 hours, and crosslinking treatment was performed. After cooled to 40°C, impregnation was carried out in the same manner as in Example 1a. Expansion was carried out at an expansion temperature of 146°C, but expansion could not be performed.

Comparative Example 4a

Impregnation was carried out in the same manner as in Example 1a except that the elastomer was changed to Pebax 2533 (manufactured by Arkema) of an amide-based elastomer, in which nylon 12 is a hard segment and polyether is a soft segment. Expansion was carried out at an expansion temperature of 120°C, but contraction occurred after expansion, and expanded particles could not be obtained.

The results of Examples 1a to 5a are shown in Table 1, and the results of Comparative Examples 1a to 4a are shown in Table 2. In Tables 1 and 2, appearance of a molded article is determined based on the following criteria.

○: There are no gaps between particles, and a surface of a molded article is flat.
✕: Gaps are generated between particles, and smoothness of a surface of a molded article is bad.

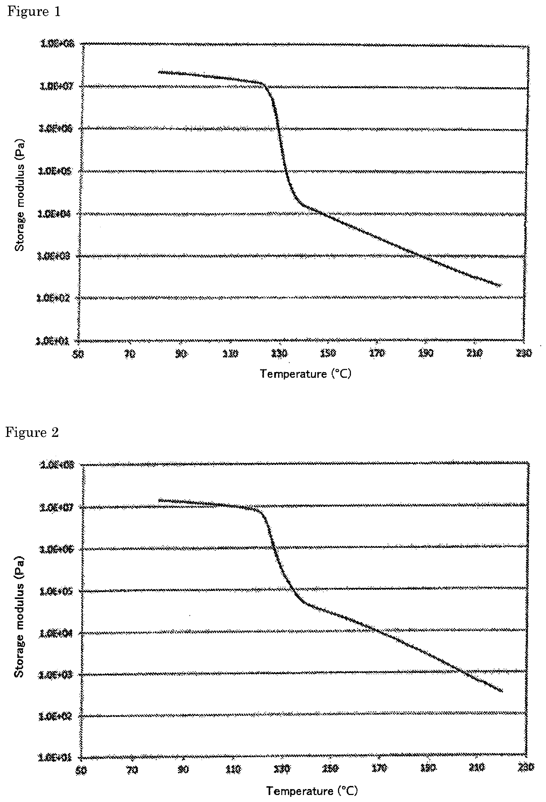

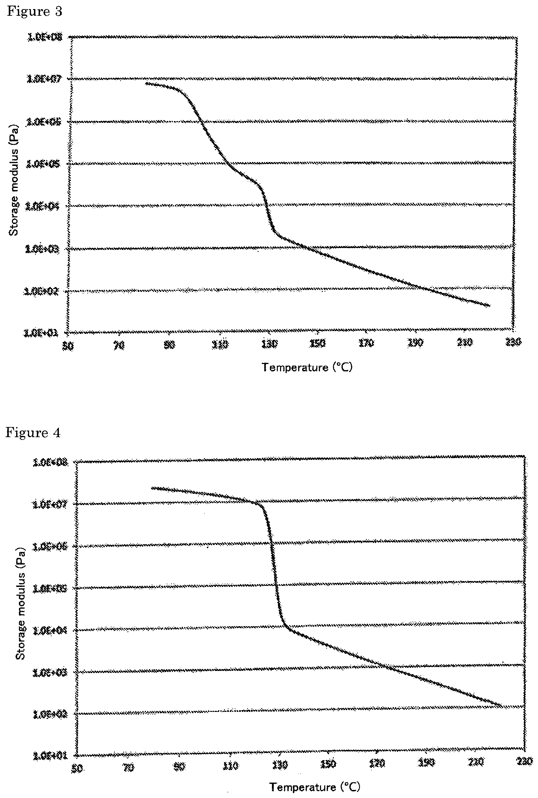

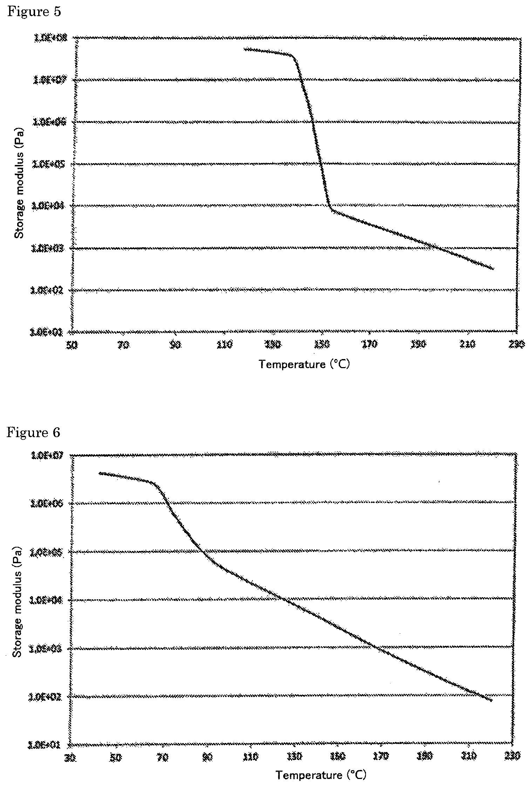

Additionally, graphs showing the relationship between the temperature and a storage modulus of amide-based elastomers of Example 1a (Example 5a), Examples 2a to 4a, Comparative Example 1a (Comparative Examples 2a and 3a), and Comparative Example 4a are shown in Figs. 1 to 6.

[Table 1]

| | Unit | Example | | | | |
|---|---|---|---|---|---|---|
| | | 1a | 2a | 3a | 4a | 5a |
| Melting point | °C | 160 | 161.3 | 138.3 | 153.1 | 160 |
| Shore D hardness | | 55 | 40 | 44 | 48 | 55 |
| Crystallization temperature Tcc | °C | 125.3 | 121.2 | 94.2 | 126.0 | 125.3 |
| $\tan \delta = 1$ | °C | 132 | 138 | 122 | 128.5 | 132 |
| Difference | °C | 6.7 | 16.8 | 27.8 | 2.5 | 6.7 |
| Storage modulus at Tcc | Pa | 6.27E+06 | 6.76E+06 | 4.76E+06 | 1.98E+06 | 6.27E+06 |
| Storage modulus at Tcc+5°C | Pa | 2.89E+05 | 1.17E+06 | 1.59E+06 | 1.55E+04 | 2.89E+05 |
| Storage modulus at Tcc-10°C | Pa | 1.39E+07 | 9.82E+06 | 7.03E+06 | 1.07E+07 | 1.39E+07 |
| Storage modulus at Tcc-15°C | Pa | 1.51E+07 | 1.06E+07 | 7.77E+06 | 1.25E+07 | 1.51E+07 |
| $\alpha$ | | 0.267 | 0.152 | 0.095 | 0.421 | 0.267 |
| $\alpha'$ | | 0.00719 | 0.00664 | 0.00869 | 0.0135 | 0.00719 |
| $\alpha'/\alpha$ | | 0.027 | 0.044 | 0.091 | 0.032 | 0.027 |
| Gel fraction | % | 3 or less | 3 or less | 3 or less | 3 or less | 3 or less |
| Bulk density | g/cm$^3$ | 0.05 | 0.048 | 0.07 | 0.06 | 0.05 |
| Average cell diameter | μm | 180 | 160 | 90 | 120 | 60 |
| Expanded particles average particle diameter | mm | 9 | 9.3 | 9 | 9 | 9 |
| Secondary expansion ratio | Times | 3.5 | 3.8 | 2.7 | 2.6 | 2.9 |
| Fusibility | | ○ | ○ | ○ | ○ | ○ |
| Molded product appearance | | ○ | ○ | ○ | ○ | ○ |
| Compression set | % | 6 | 7 | 6 | 6 | 6 |
| Resilience | % | 60 | 57 | 57 | 60 | 64 |

[Table 2]

| | Unit | Comparative Example | | | |
|---|---|---|---|---|---|
| | | 1a | 2a | 3a | 4a |
| Melting point | °C | 172.1 | 160 | 160 | 131.1 |
| Shore D hardness | | 70 | 55 | 55 | 25 |
| Crystallization temperature | °C | 137.0 | 125.3 | 125.3 | 66.5 |
| $\tan \delta = 1$ | °C | 150 | 132 | 132 | 91.7 |
| Difference | °C | 13 | 6.7 | 6.7 | 25.2 |
| Storage modulus at Tcc | Pa | 3.30E+07 | 6.27E+06 | 6.27E+06 | 2.06E+06 |
| Storage modulus at Tcc+5°C | Pa | 4.87E+06 | 2.89E+05 | 2.89E+05 | 8.45E+05 |
| Storage modulus at Tcc-10°C | Pa | 4.66E+07 | 1.39E+07 | 1.39E+07 | 3.22E+06 |
| Storage modulus at Tcc-15°C | Pa | 5.04E+07 | 1.51E+07 | 1.51E+07 | 3.54E+06 |
| $\alpha$ | | 0.166 | 0.267 | 0.267 | 0.077 |
| $\alpha'$ | | 0.00681 | 0.00719 | 0.00719 | 0.00823 |

(continued)

| | Unit | Comparative Example | | | |
|---|---|---|---|---|---|
| | | 1a | 2a | 3a | 4a |
| a'/a | | 0.041 | 0.027 | 0.027 | 0.107 |
| Gel fraction | % | 3 or less | 3 or less | 32 | 3 or less |
| Bulk density | g/cm$^3$ | | 0.05 | | - |
| Average cell diameter | $\mu$m | | 270 | - | |
| Expanded particles average particle diameter | mm | - | 9.6 | | - |
| Secondary expansion ratio | Times | - | 3.2 | - | - |
| Fusibility | | | $\times$ | - | |
| Molded product appearance | | - | $\times$ | - | - |
| Compression set | % | - | 7 | - | |
| Resilience | % | - | 53 | - | - |

From Examples 1a to 5a and Comparative Examples 1a to 4a, it is seen that by containing, as a base resin, a non-crosslinked amide-based elastomer having a Shore D hardness of 65 or less, and having a bulk density of 0.015 to 0.5 g/cm$^3$ and an average cell diameter of 20 to 250 $\mu$m, an expanded molded article excellent in fusibility, appearance, compression set, and resilience can be provided.

Then, the present invention will be explained in further detail by way of other examples, but the present invention is not limited to them.

(Manufacturing Example of Resin Particles of Amide-Based Elastomer)

First, a non-crosslinked (crystalline) amide-based elastomer, in which nylon 12 is a hard segment and polytetramethylene glycol is a soft segment (product name "Pebax 5533", manufactured by Arkema, gel fraction 3% by mass or less, Shore D hardness 55) was supplied to a single screw extruder having a caliber of 65 mm, and melt-kneaded. In addition, in the single screw extruder, the amide-based elastomer was melt-kneaded initially at 180°C, and thereafter, melt-kneaded while a temperature was raised to 220°C.

Subsequently, after the amide-based elastomer in the melted state was cooled, the amide-based elastomer was extruded through each nozzle of a multi-nozzle die mounted to a front end of the single screw extruder. In addition, the multi-nozzle die had 40 nozzles in which an outlet portion had a diameter of 0.7 mm, and all outlet portions of the nozzles were disposed on a virtual circle having a diameter of 139.5 mm at equal intervals, which was assumed on a front-end face of the multi-nozzle die. The multi-nozzle die was held at 220°C.

Four rotary blades were integrally disposed on an outer peripheral surface of a rear end portion of a rotating shaft at equal intervals in a peripheral direction of the rotating shaft, and each rotary blade was configured so that it moved on a virtual circle in the state where it was all the time contacted with the front-end face of the multi-nozzle die.

Furthermore, a cooling member was provided with a cooling drum consisting of a frontal circular anterior portion and a cylindrical peripheral wall portion extending backward from an outer peripheral edge of this anterior portion and having an inner diameter of 315 mm. Cooling water was supplied into the cooling drum through a supply tube and a supply port of the drum, and on a whole inner surface of the peripheral wall portion, cooling water at 20°C was spirally flown forward along this inner surface.

The rotary blade disposed on the front-end face of the multi-nozzle die was rotated at the rotation number of 3,440 rpm, and an amide-based elastomer extrudate which had been extruded through an outlet portion of each nozzle of the multi-nozzle die was cut with the rotary blade to manufacture approximately spherical resin particles of the amide-based elastomer.

In addition, upon manufacturing of the resin particles, first, the rotating shaft was not mounted in the multi-nozzle die, and the cooling member was retracted from the multi-nozzle die. In this state, the amide-based elastomer was extruded from an extruder. Then, the rotating shaft was mounted in the multi-nozzle die, and the cooling member was disposed in position, thereafter, the rotating shaft was rotated, and the amide-based elastomer was cut with the rotary blade at an opening end of the outlet portion of the nozzle to manufacture resin particles.

The resin particles were made to fly outward or forward by the cutting stress due to the rotary blade, and collided with cooling water flowing along an inner surface of the cooling drum of the cooling member to be immediately cooled.

The cooled resin particles were discharged together with cooling water through a discharge port of the cooling drum, and were separated from cooling water with a dehydrator. The resulting resin particles had a length L of the particles of 1.2 to 1.7 mm and a diameter D of the particles of 0.8 to 0.9 mm.

(Example 1b)

<Preparation of Expandable Particles>

An autoclave with a stirrer having an internal volume of 5 liters was charged with 2.3 kg of the above-described resin particles, 2.0 kg of distilled water, 6.0 g of magnesium pyrophosphate, and 0.81 g of sodium dodecylbenzenesulfonate, and the materials were suspended under stirring at 320 rpm.

Then, to 0.3 kg of distilled water were added 0.9 g of magnesium pyrophosphate, 0.11 g of sodium dodecylbenzenesulfonate, and 1.2 g of ethylene bis(stearic acid amide) (0.05 parts by mass based on 100 parts by mass of resin particles) as a cell adjusting agent, the materials were stirred with a homomixer to prepare a suspension, and this suspension was added into a reactor vessel. Thereafter, the temperature was raised to 110°C, 460 g of butane (isobutane: normal butane=35:65 (mass ratio)) as a blowing agent was fed therein under pressure, and the mixture was held at 110°C for 6 hours, cooled to 20°C, taken out, washed, dehydrated, and dried to obtain expandable particles. A whole surface of the expandable particles was uniformly covered with calcium carbonate at 0.1 parts by mass based on 100 parts by mass of the resulting expandable particles.

<Preparation of Expanded Particles>

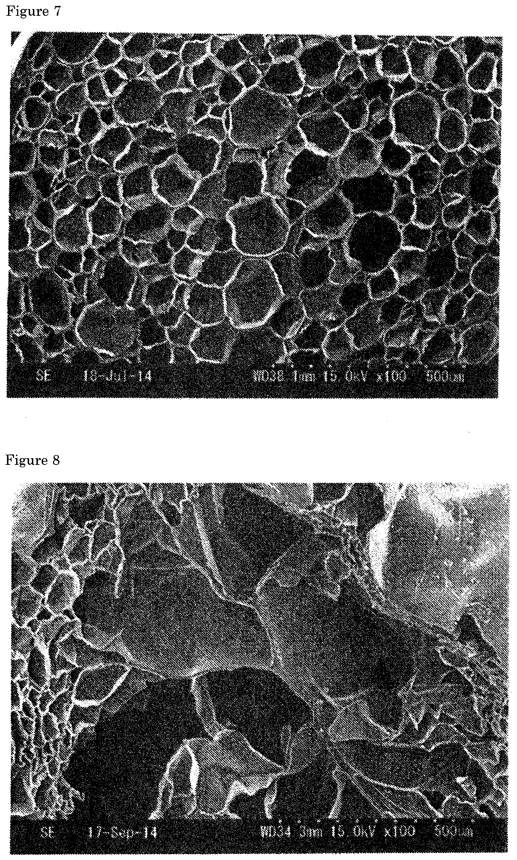

The expandable particles were placed into a cylindrical batch type pressure pre-expanding machine having a volume amount of 50 liters, and heated with the steam, thereby, expanded particles were obtained. The expanded particles had the bulk density of 0.1 g/cm$^3$, an average cell diameter of 116 $\mu$m, and an average particle diameter of 1.9 mm. A cross-sectional photograph of the expanded particles is shown in Fig. 7. From Fig. 7, it is seen that the expanded particles have a fine uniform cell structure.

<Preparation of Expanded Molded Article>

The expanded particles were placed into a closed container, nitrogen was fed under pressure into this closed container at a pressure (gauge pressure) of 0.5 MPa, and the container was allowed to stand at an ambient temperature over 6 hours to impregnate nitrogen into the expanded particles.

The expanded particles were taken out from the closed container, filled into a cavity of a mold die having a cavity of a size of 400 mm $\times$ 300 mm $\times$ 30 mm, and heated and molded with the water steam at 0.25 MPa for 35 seconds to obtain an expanded molded article having a density of 0.1 g/cm$^3$. The resulting expanded molded article had a fine uniform cell structure.

(Example 2b)

An expanded molded article was obtained in the same manner as in Example 1b except that 2.3 g (0.1 parts by mass based on 100 parts by mass of resin particles) of ethylenebis(stearic acid amide) was added. The resulting expanded molded articles had a fine uniform cell structure. The expanded particles had the bulk density of 0.08 g/cm$^3$, an average cell diameter of 162 $\mu$m, and an average particle diameter of 1.9 mm.

(Example 3b)

An expanded molded article was obtained in the same manner as in Example 1b except that 23 g (1 part by mass based on 100 parts by mass of resin particles) of ethylenebis(stearic acid amide) was added. The resulting expanded molded article had a fine uniform cell structure. The expanded particles had the bulk density of 0.2 g/cm$^3$, an average cell diameter of 82 $\mu$m, and an average particle diameter of 1.7 mm.

(Example 4b)

An expanded molded article was obtained in the same manner as in Example 1b except that 2.3 g (0.1 parts by mass based on 100 parts by mass of resin particles) of polyethylene wax was added. The resulting expanded molded article had a fine uniform cell structure. The expanded particles had the bulk density of 0.07 g/cm$^3$, an average cell

diameter of 181 $\mu$m, and an average particle diameter of 1.9 mm.

(Example 5b)

An expanded molded article was obtained in the same manner as in Example 1b except that 2.3 g (0.1 parts by mass based on 100 parts by mass of resin particles) of ethylenebis-12-hydroxystearic acid amide was added. The resulting expanded molded article had a fine uniform cell structure. The expanded particles had the bulk density of 0.17 g/cm$^3$, an average cell diameter of 181 $\mu$m, and an average particle diameter of 1.7 mm.

(Example 6b)

An expanded molded article was obtained in the same manners as in the manufacturing example and Example 1b except that a non-crosslinked (crystalline) amide-based elastomer, in which nylon 12 is a hard segment and polytetramethylene glycol is a soft segment (product name "UBESTA9040", manufactured by Ube Industries, Ltd., gel fraction 3% by mass or less) was used. The resulting expanded molded article had a fine uniform cell structure. The expanded particles had the bulk density of 0.1 g/cm$^3$, an average cell diameter of 120 $\mu$m, and an average particle diameter of 1.9 mm.

(Example 7b)

An expanded molded article was obtained in the same manner as in Example 1b except that, in the manufacturing example of resin particles of an amide-based elastomer, a sodium carbonate citric acid-based chemical blowing agent (product name "Fine Cell Master P0410K", manufactured by Dainichiseika Color & Chemicals Mfg. Co., Ltd.) as a cell adjusting agent was supplied at 0.5 parts by mass based on 100 parts by mass of the amide-based elastomer. The resulting expanded molded article had a fine uniform cell structure. The expanded particles had the bulk density of 0.1 g/cm$^3$, an average cell diameter of 131 $\mu$m, and an average particle diameter of 1.9 mm.

(Example 8b)

Expanded particles having a bulk density of 0.16 g/cm$^3$ were obtained in the same manner as in Example 7b. Then, the expanded particles were placed into a closed container, nitrogen was fed under pressure into this closed container at a pressure (gauge pressure) of 0.8 MPa, and the container was allowed to stand at an ambient temperature over 6 hours to impregnate nitrogen into the expanded particles.
The expanded particles were taken out from the closed container, placed into a cylindrical batch type pressure pre-expanding machine having a volume amount of 50 liters, and heated with the steam to obtain expanded particles having a bulk density of 0.04 g/cm$^3$. The expanded particles had an average cell diameter of 189 $\mu$m and an average particle diameter of 3.2 mm.
An expanded molded article was prepared in the same manner as in Example 1b. The resulting expanded molded article had a fine uniform cell structure.

(Comparative Example 1b)

Expandable particles were obtained in the same manner as in Example 1b except that ethylenebis(stearic acid amide) was not added. Then, the expandable particles were placed into a pre-expanding machine, and heated with the steam, coalescence of cells was generated, and an expanded molded article could not been obtained. The expanded particles had an average cell diameter of 282 $\mu$m. A cross-sectional photograph of the expanded particles in which coalescence of cells was generated is shown in Fig. 8.

(Comparative Example 2b)

Expandable particles were obtained in the same manner as in Example 1b except that 0.12 g (0.005 parts by mass based on 100 parts by mass of resin particles) of ethylenebis(stearic acid amide) was added. Then, the expandable particles were placed into a pre-expanding machine, and heated with the steam, coalescence of cells was generated, and an expanded molded article could not be obtained. The expanded particles had an average cell diameter of 296 $\mu$m.

(Reference Example 1b)

An expanded molded article was obtained in the same manner as in Example 1b except that 250 g (10 parts by mass based on 100 parts by mass of resin particles) of ethylenebis(stearic acid amide) was added. The resulting expanded molded article had a fine uniform cell structure. The expanded particles had the bulk density of 0.1 g/cm³, an average cell diameter of 112 μm, and an average particle diameter of 1.9 mm.

Physical properties of examples and comparative examples are described together in Table 3. In Table, A means Pebax 5533, B means UBASTA9040, EBSA means ethylenebis(stearic acid amide), PEW means polyethylene wax, and EBHSA means ethyelenebis-12-hydroxystearic acid amide. In Table 3, appearance of the expanded molded article is visually evaluated. The case where a boundary part at which expanded particles on an expanded molded article surface are mutually joined is smooth is expressed by ○, and the case where coalescence of cells was generated, and expanded particles and an expanded molded article could not been obtained is expressed by ×.

[Table 3]

| | | | Example | | | | | | | | Comparative Example | | Reference Example |
|---|---|---|---|---|---|---|---|---|---|---|---|---|---|
| | | | 1b | 2b | 3b | 4b | 5b | 6b | 7b | 8b | 1b | 2b | 1b |
| Resin species | | | A | A | A | A | A | B | A | A | A | A | A |
| Crystallization temperature Tcc | °C | | 125.3 | 125.3 | 125.3 | 125.3 | 125.3 | 126.0 | 125.3 | 125.3 | 125.3 | 125.3 | 125.3 |
| tanδ=1 | °C | | 132 | 132 | 132 | 132 | 132 | 128.5 | 132 | 132 | 132 | 132 | 132 |
| Difference | °C | | 6.7 | 6.7 | 6.7 | 6.7 | 6.7 | 2.5 | 6.7 | 6.7 | 6.7 | 6.7 | 6.7 |
| Storage modulus at Tcc | Pa | | 6.27E+06 | 6.27E+06 | 6.27E+06 | 6.27E+06 | 6.27E+06 | 1.98E+06 | 6.27E+06 | 6.27E+06 | 6.27E+06 | 6.27E+06 | 6.27E+06 |
| Storage modulus at Tcc+5°C | Pa | | 2.89E+05 | 2.89E+05 | 2.89E+05 | 2.89E+05 | 2.89E+05 | 1.55E+04 | 2.89E+05 | 2.89E+05 | 2.89E+05 | 2.89E+05 | 2.89E+05 |
| Storage modulus at Tcc⁻10°C | Pa | | 1.39E+07 | 1.39E+07 | 1.39E+07 | 1.39E+07 | 1.39E+07 | 1.07E+07 | 1.39E+07 | 1.39E+07 | 1.39E+07 | 1.39E+07 | 1.39E+07 |
| Storage modulus at Tcc⁻15°C | Pa | | 1.51E+07 | 1.51E+07 | 1.51E+07 | 1.51E+07 | 1.51E+07 | 1.25E+07 | 1.51E+07 | 1.51E+07 | 1.51E+07 | 1.51E+07 | 1.51E+07 |
| α | | | 0.267 | 0.267 | 0.267 | 0.267 | 0.267 | 0.421 | 0.267 | 0.267 | 0.267 | 0.267 | 0.267 |
| α' | | | 0.00719 | 0.00719 | 0.00719 | 0.00719 | 0.00719 | 0.0135 | 0.00719 | 0.00719 | 0.00719 | 0.00719 | 0.00719 |
| α'/α | | | 0.027 | 0.027 | 0.027 | 0.027 | 0.027 | 0.032 | 0.027 | 0.027 | 0.027 | 0.027 | 0.027 |
| Expanded particles | Bulk density (g/cm³) | | 0.10 | 0.08 | 0.20 | 0.07 | 0.17 | 0.10 | 0.10 | 0.04 | - | - | 0.10 |
| | Average cell diameter (µm) | | 116 | 162 | 82 | 181 | 181 | 120 | 131 | 189 | 282 | 296 | 112 |
| | Ratio of cells (%) | 250 µm or more | 0 | 7 | 0 | 7 | 3 | 1 | 0 | 4 | 10 | 13 | 0 |
| | | 150 µm or more and less than 250 µm | 2 | 26 | 0.2 | 34 | 20 | 13 | 10 | 39 | 6 | 6 | 2 |
| | | Less than 150 µm | 98 | 67 | 99.8 | 59 | 77 | 86 | 90 | 57 | 84 | 81 | 98 |
| | Average particle diameter (mm) | | 1.9 | 1.9 | 1.7 | 1.9 | 1.7 | 1.9 | 1.9 | 3.2 | 1.9 | 1.9 | 1.9 |
| Cell adjusting agent | Addition timing | | Impregnation | Impregnation | Impregnation | Impregnation | Impregnation | Impregnation | Extrusion | Extrusion | - | Impregnation | Impregnation |
| | Kind | | EBSA | EBSA | EBSA | PEW | EBHSA | EBSA | PO410K | PO410K | - | EBSA | EBSA |
| | Part(s) by mass | | 0.05 | 0.1 | 1 | 0.1 | 0.1 | 0.1 | 0.5 | 0.5 | 0 | 0.005 | 10 |
| Expanded molded article | Appearance | | ○ | ○ | ○ | ○ | ○ | ○ | ○ | ○ | × | × | ○ |
| | Fusibility | | ○ | ○ | ○ | ○ | ○ | ○ | ○ | ○ | × | × | ○ |
| | Resilience | % | 58 | 54 | 59 | 52 | 54 | 55 | 55 | 52 | - | - | 56 |
| | Compression set | % | 6 | 7 | 5 | 6 | 7 | 6 | 6 | 7 | - | - | 6 |

From Table 3, it is seen that by expanded particles having an average cell diameter and an average particle diameter in the specified ranges, an expanded molded article having good appearance is obtained.

The present invention will be explained in more detail by way of further other examples, but the present invention is not limited to them.

(Manufacturing of Polyamide-Based Elastomer Small Particles)

First, 100 parts by mass of a crystalline amide-based elastomer (product name "Pebax 5533" manufactured by Arkema) and 0.2 parts by mass of ethylenebis(stearic acid amide) (product name "KAO WAX EB-FF" manufactured by Kao Corporation) as a cell adjusting agent were supplied into a single screw extruder having a caliber of 65 mm, and melt-kneaded. In addition, in the single screw extruder, the amide-based elastomer was melt-kneaded initially at 180°C, and thereafter, melt-kneaded while a temperature was raised to 220°C.

Subsequently, after the amide-based elastomer in the melted state was cooled, the amide-based elastomer was extruded through each nozzle of a multi-nozzle die mounted to a front end of the single screw extruder. In addition, the multi-nozzle die had 40 nozzles in which an outlet portion had a diameter of 0.7 mm, and all outlet portions of the nozzles were disposed on a virtual circle having a diameter of 139.5 mm at equal intervals, which was assumed on a front-end face of the multi-nozzle die. The multi-nozzle die was held at 220°C.

Four rotary blades were integrally disposed on an outer peripheral surface of a rear end portion of a rotating shaft at equal intervals in a peripheral direction of the rotating shaft, and each rotary blade was configured so that it moved on a virtual circle in the state where it was all the time contacted with the front-end face of the multi-nozzle die.

Furthermore, a cooling member was provided with a cooling drum consisting of a frontal circular anterior portion and a cylindrical peripheral wall portion extending backward from an outer peripheral edge of this anterior portion and having an inner diameter of 315 mm. Cooling water was supplied into the cooling drum through a supply tube and a supply port of the drum, and on a whole inner surface of the peripheral wall portion, cooling water at 20°C was spirally flown forward along this inner surface.

The rotary blade disposed on the front-end face of the multi-nozzle die was rotated at the rotation number of 3,440 rpm, and an amide-based elastomer extrudate which had been extruded through an outlet portion of each nozzle of the multi-nozzle die was cut with the rotary blade to manufacture approximately spherical resin particles of the amide-based elastomer.

In addition, upon manufacturing of the resin particles, first, the rotating shaft was not mounted in the multi-nozzle die, and the cooling member was retracted from the multi-nozzle die. In this state, the amide-based elastomer was extruded from an extruder. Then, the rotating shaft was mounted in the multi-nozzle die, and the cooling member was disposed in position, thereafter, the rotating shaft was rotated, and the amide-based elastomer was cut with the rotary blade at an opening end of the outlet portion of the nozzle to manufacture resin particles.

The resin particles were made to fly outward or forward by the cutting stress due to the rotary blade, and collided with cooling water flowing along an inner surface of the cooling drum of the cooling member to be immediately cooled.

The cooled resin particles were discharged together with cooling water through a discharge port of the cooling drum, and were separated from cooling water with a dehydrator. The resulting resin particles had a length of the particles of 1.2 to 1.7 mm and a diameter of the particles of 0.8 to 0.9 mm.

(Example 1c)

<Preparation of Expandable Particles>

Into a pressure-resistant closable V-type blender having an inner volume of 50 liters were placed 15 kg (this is let to be 100 parts by mass) of the resulting resin particles, 3 parts by mass of water, and 0.25 parts by mass of calcium carbonate as a coalescence preventing agent, the blender was closed, and the materials were stirred. While stirring, 12 parts by mass of butane was fed therein under pressure. After butane was fed therein under pressure, the interior of the blender was held at 60°C for 2 hours, and cooled to 30°C, thereby, expandable particles were taken out.

<Preparation of Expanded Particles>

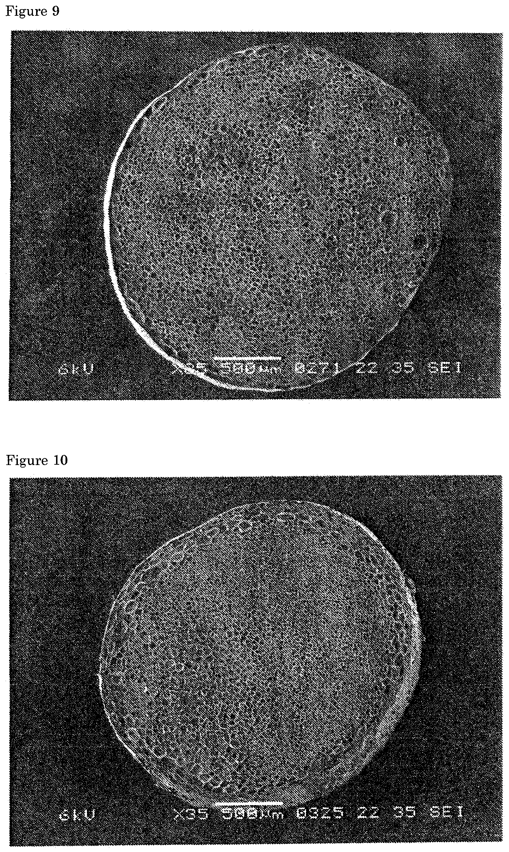

The expandable particles were placed into a cylindrical batch type pressure pre-expanding machine having a volume amount of 50 liters, and heated with the steam to obtain expanded particles. The expanded particles had the density of 0.1 g/cm$^3$, an average cell diameter of 68 $\mu$m, an outermost surface layer cell diameter of 118 $\mu$m, and an average particle diameter of 1.7 mm. A cross-sectional photograph of the expanded particles is shown in Fig. 9. From Fig. 9, it is seen that the expanded particles had a fine uniform cell structure.

<Preparation of Expanded Molded Article>

The expanded particles were placed into a closed container, nitrogen was fed under pressure into this closed container at a pressure (gauge pressure) of 1.0 MPaG, the container was allowed to stand at an ambient temperature over 12 hours to impregnate nitrogen into the expanded particles.

The expanded particles were taken out from the closed container, filled into a cavity of a mold die having a cavity of a size of 400 mm × 300 mm × 30 mm, and heated and molded with the water steam at 0.25 MPa for 35 seconds to obtain an expanded molded article having a density of 0.1 g/cm$^3$. The resulting expanded molded article had the fusion ratio of 60%, and had a fine uniform cell structure.

(Example 2c)

An expanded molded article having a density of 0.1 g/cm$^3$ was obtained in the same manner as in Example 1c except that 1 part by mass of water was added at dry impregnation. The expanded particles had the bulk density of 0.1 g/cm$^3$, an average cell diameter of 84 $\mu$m, a surface layer average cell diameter of 131 $\mu$m, and an average particle diameter of 1.9 mm. The resulting expanded molded article had the fusion ratio of 60%, and had a fine uniform cell structure. A cross-sectional photograph of the expanded particles is shown in Fig. 10. From Fig. 10, it is seen that the expanded particles have a fine uniform cell structure.

<Surface Layer Average Cell Diameter (Average Cell Diameter of Outermost Surface Layer)>

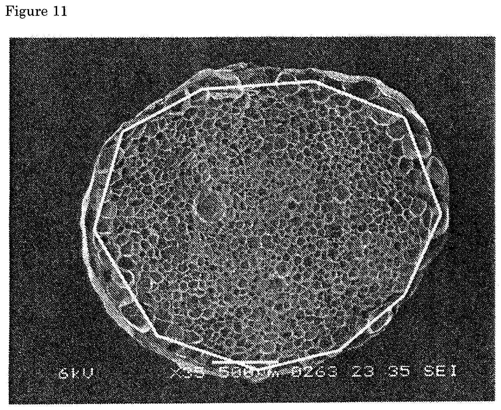

An average cell diameter of the expanded particles refers to an average cell diameter measured in accordance with the test method of ASTM D 2842-69. Specifically, the expanded particles are cut into approximately two equal parts, and a cut section is magnified and photographed using a scanning electron microscope (product name "S-3000N", manufactured by Hitachi, Ltd.). Each four images of photographed images are printed on an A4 paper, and cells existing in an outermost surface layer of a cross section of the particles are connected with a straight line, for example as shown with a white line in Fig. 11. From a total of the lengths of straight lines connecting all cells in a surface layer and the number of cells existing on these straight lines, an average chord length (t) of cells is calculated from the following equation. In addition, a cell in an outermost surface layer herein means cells contained in 10% of a radius from the surface layer of the particles, in a cross section of the expanded particles.

$$\text{Average chord length t} = \text{total of lengths of straight lines}/(\text{number of cells} \times$$

$$\text{magnification of photograph})$$

Further, for five particles, an average chord length is calculated with the same outline as that described above, and an arithmetic mean value of these average chord lengths is defined as average cell diameter of cells of the expanded particles.

**Claims**

1.  Amide-based elastomer expanded particles comprising, as a base resin, a non-crosslinked amide-based elastomer having a Shore D hardness of 65 or less and both of a storage modulus at a temperature of crystallization temperature - 10°C and a storage modulus at a temperature of crystallization temperature - 15°C in a range of $4 \times 10^6$ to $4 \times 10^7$ Pa, and having an average cell diameter of 20 to 250 $\mu$m and an average particle diameter of 1.5 to 15 mm, wherein the Shore D hardness is measured according to JIS K6253-3:2012 and the storage modulus is measured by dynamic viscoelasticity measurement in accordance with section <Storage Modulus> of the description.

2.  The amide-based elastomer expanded particles according to claim 1, having a bulk density of 0.015 to 0.5 g/cm$^3$.

3.  The amide-based elastomer expanded particles according to claim 1, having an average particle diameter of more than 5 mm and 15 mm or less.

4.  The amide-based elastomer expanded particles according to claim 1, having an average particle diameter of 1.5 to 5 mm.

5.  The amide-based elastomer expanded particles according to claim 1, wherein said amide-based elastomer expanded particles have an outermost surface layer exhibiting an average cell diameter of 20 to 150 $\mu$m in a cross section thereof.

6.  A method for manufacturing amide-based elastomer expanded particles according to claim 1, the method comprising the steps of:

    impregnating a blowing agent into resin particles comprising 100 parts by mass of a non-crosslinked amide-based elastomer having a Shore D hardness of 65 or less and both of a storage modulus at a temperature of crystallization temperature - 10°C and a storage modulus at a temperature of crystallization temperature - 15°C in a range of $4 \times 10^6$ to $4 \times 10^7$ Pa, and 0.02 to 1 part by mass of a cell adjusting agent to obtain expandable particles; and
    expanding said expandable particles to obtain expanded particles having an average cell diameter of 20 to 250 $\mu$m and an average particle diameter of 1.5 to 15 mm, wherein the Shore D hardness is measured according to JIS K6253-3:2012 and the storage modulus is measured by dynamic viscoelasticity measurement in accordance with section <Storage Modulus> of the description.

7.  The method for manufacturing amide-based elastomer expanded particles according to claim 6, wherein said cell adjusting agent is a fatty acid amide-based organic substance.

8.  The method for manufacturing amide-based elastomer expanded particles according to claim 6, wherein said expandable particles are obtained by impregnating said blowing agent into said resin particles in the presence of water, and said water is used at 0.5 to 4 parts by weight based on 100 parts by weight of said resin particles.

9.  An expanded molded article which is obtained by in-mold expanding the amide-based elastomer expanded particles according to claim 1.

10. The expanded molded article according to claim 9, wherein said expanded molded article has a compression set of 10% or less and a restitution coefficient of 50 or more.

**11.** A method for manufacturing an expanded molded article, the method comprising in-mold expanding the amide-based elastomer expanded particles according to claim 1.

**12.** The method for manufacturing an expanded molded article according to claim 11, wherein said in-mold expansion is performed using said amide-based elastomer expanded particles exhibiting a secondary expansion ratio of 1.5 to 4.0 times when heated with water steam at a gauge pressure of 0.27 MPa for 20 seconds.

**Patentansprüche**

**1.** Expandierte Elastomerteilchen auf Amid-Basis, umfassend, als Basisharz, ein unvernetztes Elastomer auf Amid-Basis,

das eine Shore-D-Härte von 65 oder weniger und sowohl ein Speichermodul bei einer Temperatur einer Kristallisationstemperatur minus 10 °C
als auch einen Speichermodul bei einer Temperatur einer Kristallisationstemperatur minus 15 °C in einem Bereich von $4 \times 10^6$ bis $4 \times 10^7$ Pa aufweist, und einen durchschnittlichen Zellendurchmesser von 20 bis 250 $\mu$m und einen durchschnittlichen Teilchendurchmesser von 1,5 bis 15 mm aufweist, wobei die Shore-D-Härte gemäß JIS K6253-3:2012 gemessen wird und das Speichermodul durch dynamische Viskoelastizitätsmessung gemäß dem Abschnitt <Speichermodul> der Beschreibung gemessen wird.

**2.** Expandierte Elastomerteilchen auf Amid-Basis gemäß Anspruch 1, die eine Schüttdichte von 0,015 bis 0,5 g/cm$^3$ aufweisen.

**3.** Expandierte Elastomerteilchen auf Amid-Basis gemäß Anspruch 1, die einen durchschnittlichen Teilchendurchmesser von mehr als 5 mm und 15 mm oder weniger aufweisen.

**4.** Expandierte Elastomerteilchen auf Amid-Basis gemäß Anspruch 1, die einen durchschnittlichen Teilchendurchmesser von 1,5 bis 5 mm aufweisen.

**5.** Expandierte Elastomerteilchen auf Amid-Basis gemäß Anspruch 1, wobei die expandierten Elastomerteilchen auf Amid-Basis eine äußerste Oberflächenschicht aufweisen, die in einem Querschnitt davon einen durchschnittlichen Zellendurchmesser von 20 bis 150 $\mu$m aufweist.

**6.** Verfahren zur Herstellung von expandierten Elastomerteilchen auf Amid-Basis gemäß Anspruch 1, wobei das Verfahren die folgenden Schritte umfasst:

Imprägnieren eines Treibmittels in Harzteilchen, umfassend 100 Massenteile eines unvernetzten Elastomers auf Amid-Basis, das eine Shore-D-Härte von 65 oder weniger und sowohl ein Speichermodul bei einer Temperatur einer Kristallisationstemperatur minus 10 °C als auch ein Speichermodul bei einer Temperatur einer Kristallisationstemperatur minus 15 °C in einem Bereich von $4 \times 10^6$ bis $4 \times 10^7$ Pa aufweist, und 0,02 bis 1 Massenteile eines zelleinstellenden Mittels, um expandierbare Teilchen zu erhalten; und
Expandieren der expandierbaren Teilchen, um expandierte Teilchen, die einen durchschnittlichen Zellendurchmesser von 20 bis 250 $\mu$m und einen durchschnittlichen Teilchendurchmesser von 1,5 bis 15 mm aufweisen, zu erhalten,
wobei die Shore-D-Härte gemäß JIS K6253-3:2012 gemessen wird und der Speichermodul durch dynamische Viskoelastizitätsmessung gemäß dem Abschnitt <Speichermodul> der Beschreibung gemessen wird.

**7.** Verfahren zur Herstellung von expandierten Elastomerteilchen auf Amid-Basis gemäß Anspruch 6, wobei das zelleinstellende Mittel eine organische Substanz auf Fettsäureamid-Basis ist.

**8.** Verfahren zur Herstellung von expandierten Elastomerteilchen auf Amid-Basis gemäß Anspruch 6, wobei die expandierbaren Teilchen durch Imprägnieren des Treibmittels in die Harzteilchen in Gegenwart von Wasser erhalten werden und das Wasser in einer Menge von 0,5 bis 4 Gew.-Teilen, bezogen auf 100 Gew.-Teile der Harzteilchen, eingesetzt wird.

9. Expandierter Formkörper, der durch In-Mold-Expandieren der expandierten Elastomerteilchen auf Amid-Basis gemäß Anspruch 1 erhalten wird.

10. Expandierter Formkörper gemäß Anspruch 9, wobei der expandierte Formkörper einen Druckverformungsrest von 10% oder weniger und einen Restitutionskoeffizienten von 50 oder mehr aufweist.

11. Verfahren zur Herstellung eines expandierten Formkörpers, wobei das Verfahren ein In-Mold-Expandieren der expandierten Elastomerteilchen auf Amid-Basis gemäß Anspruch 1 umfasst.

12. Verfahren zur Herstellung eines expandierten Formkörpers gemäß Anspruch 11, wobei die In-Mold-Expansion unter Verwendung der expandierten Elastomerteilchen auf Amid-Basis, die ein 1,5- bis 4,0-faches sekundäres Expansionsverhältnis aufweisen, wenn sie mit Wasserdampf bei einem Überdruck von 0,27 MPa für 20 Sekunden erwärmt werden, durchgeführt wird.

**Revendications**

1. Particules expansées d'élastomère à base d'amide comprenant, en tant que résine de base, un élastomère à base d'amide non réticulé présentant une dureté Shore D de 65 ou moins et les deux parmi un module de stockage à une température de température de cristallisation de -10 °C et un module de stockage à une température de température de cristallisation de -15 °C dans une plage de $4 \times 10^6$ à $4 \times 10^7$ Pa, et présentant un diamètre moyen de cellule de 20 à 250 $\mu$m et un diamètre moyen de particule de 1,5 à 15 mm, dans lesquelles la dureté Shore D est mesurée selon JIS K6253-3:2012 et le module de stockage est mesuré par mesure de viscoélasticité dynamique conformément à la section <Module de stockage> de la description.

2. Particules expansées d'élastomère à base d'amide selon la revendication 1, présentant une densité en vrac de 0,015 à 0,5 g/cm$^3$.

3. Particules expansées d'élastomère à base d'amide selon la revendication 1, présentant un diamètre moyen de particule de plus de 5 mm et de 15 mm ou moins.

4. Particules expansées d'élastomère à base d'amide selon la revendication 1, présentant un diamètre moyen de particule de 1,5 à 5 mm.

5. Particules expansées d'élastomère à base d'amide selon la revendication 1, dans lesquelles lesdites particules expansées d'élastomère à base d'amide présentent une couche de surface extérieure présentant un diamètre moyen de cellule de 20 à 150 $\mu$m dans une section transversale de celles-ci.

6. Procédé pour produire des particules expansées d'élastomère à base d'amide selon la revendication 1, le procédé comprenant les étapes consistant à :

   imprégner un agent gonflant dans des particules de résine comprenant 100 parties en masse d'élastomère à base d'amide non réticulé présentant une dureté Shore D de 65 ou moins et les deux parmi un module de stockage à une température de température de cristallisation de -10 °C et un module de stockage à une température de température de cristallisation de -15 °C dans une plage de $4 \times 10^6$ à $4 \times 10^7$ Pa, et 0,02 à 1 partie en masse d'un agent ajusteur de cellule pour obtenir des particules expansibles ; et
   expanser lesdites particules expansibles pour obtenir des particules expansées présentant un diamètre moyen de cellule de 20 à 250 $\mu$m et un diamètre moyen de particule de 1,5 à 15 mm, dans lequel la dureté Shore D est mesurée selon JIS K6253-3:2012 et le module de stockage est mesuré par mesure de viscoélasticité dynamique conformément à la section <Module de stockage> de la description.

7. Procédé pour produire des particules expansées d'élastomère à base d'amide selon la revendication 6, dans lequel ledit agent ajusteur de cellule est une substance organique à base d'amide d'acide gras.

8. Procédé pour produire des particules expansées d'élastomère à base d'amide selon la revendication 6, dans lequel lesdites particules expansibles sont obtenues en imprégnant ledit agent gonflant dans lesdites particules de résine en présence d'eau, et ladite eau est utilisée à raison de 0,5 à 4 parties en poids sur la base de 100 parties en poids desdites particules de résine.

9. Article moulé expansé qui est obtenu par expansion dans un moule des particules expansées d'élastomère à base d'amide selon la revendication 1.

10. Article moulé expansé selon la revendication 9, dans lequel ledit article moulé expansé présente une compression rémanente de 10% ou moins et un coefficient de restitution de 50 ou plus.

11. Procédé de production d'un article moulé expansé, le procédé comprenant une expansion dans un moule des particules expansées d'élastomère à base d'amide selon la revendication 1.

12. Procédé pour produire un article moulé expansé selon la revendication 11, dans lequel ladite expansion dans un moule est effectuée en utilisant lesdites particules expansées d'élastomère à base d'amide présentant un rapport d'expansion secondaire de 1,5 à 4,0 fois lorsqu'elles sont chauffées avec un courant d'eau à une pression manométrique de 0,27 MPa pendant 20 secondes.

Figure 1

Figure 2

Figure 3

Figure 4

Figure 5

Figure 6

Figure 7

Figure 8

Figure 9

Figure 10

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI417977 B
- JP S6042432 A
- EP 1650255 A1
- US 4331786 A
- US 4115475 A
- US 4195015 A
- US 4839441 A
- US 4864014 A
- US 4230838 A
- US 4332920 A